# EUROPÄISCHE PATENTSCHRIFT

(11) **EP 1 826 420 B1**
(45) Veröffentlichungstag und Bekanntmachung des Hinweises auf die Patenterteilung: **22.05.2013**
(21) Anmeldenummer: 06024632.9
(22) Anmeldetag: 28.11.2006
(51) Int. Cl.: B60W 30/18, B60W 10/04, F16H 61/475, B62D 11/00

(54) **Verfahren sowie Vorrichtung zur Regelung eines Antriebssystems**
Method and apparatus for controlling a drive system
Méthode et dispositif pour le réglage d'un système d'entraînement

(30) Priorität: 27.02.2006 DE 10609064
(43) Veröffentlichungstag der Anmeldung: 29.08.2007
(73) Patentinhaber: Liebherr-Werk Nenzing GmbH, 6710 Nenzing (AT)
(72) Erfinder: Krimbacher, Norbert, Dr., 6822 Satteins (AT)
(74) Vertreter: Thoma, Michael

(56) Entgegenhaltungen:
- EP-A1- 0 268 078
- DE-A1- 3 739 387
- DE-A1- 4 325 703
- GB-A- 2 221 518
- US-A- 4 023 637
- US-A1- 2003 111 288
- US-B1- 6 321 866

## Beschreibung

Die vorliegende Erfindung betrifft allgemein ein Verfahren sowie eine Vorrichtung zur Regelung eines Antriebssystems, insbesondere eines hydraulischen Fahrantriebs eines Krans, einer Raupe, eines Flurförderers oder einer Baumaschine, das zumindest eine Antriebseinheit für ein anzutreibendes Element aufweist. Die Erfindung betrifft dabei einerseits ein Verfahren, bei dem ein Soll-Wert eines Abtriebsparameters sowie ein Leistungsgrenzwert für die zumindest eine Antriebseinheit vorgegeben werden und in Abhängigkeit des vorgegebenen Soll-Werts des Abtriebsparameters und des vorgegebenen Leistungsgrenzwerts zumindest ein Stellsignal für die zumindest eine Antriebseinheit bereitgestellt wird. Die Erfindung betrifft dabei insbesondere ein Verfahren, bei dem zumindest zwei separate Antriebseinheiten für ein linkes Antriebsrad und ein rechtes Antriebsrad vorgesehen sind, wobei jeweils eine Soll-Drehzahl für die beiden Räder vorgegeben und in Abhängigkeit der vorgegebenen Soll-Drehzahlen zumindest ein Stellsignal für die Antriebseinheiten bereitgestellt wird. Ferner betrifft die Erfindung eine Regelvorrichtung zur Regelung eines solchen Antriebssystems, mit einem Steuersignalkreis zur Bereitstellung eines Stellsignals zur Einstellung der zumindest einen Antriebseinheit in Abhängigkeit eines vorgegebenen Soll-Werts eines Abtriebsparameters sowie eines vorgegebenen Leistungsgrenzwerts für die zumindest eine Antriebseinheit. Schließlich betrifft die Erfindung einen Kran, eine Raupe oder eine Baumaschine mit einer solchen Regelvorrichtung.

Krane, aber auch andere Baumaschinen, besitzen regelmäßig hydraulische Antriebssysteme mit zumindest einem geschlossenen Hydraulikkreis, der eine Hydraulikpumpe in Kombination mit einem Hydraulikmotor besitzt. Mittels solcher hydraulischer Antriebssysteme werden beispielsweise an Kranen verschiedene Antriebsfunktionen realisiert, insbesondere können Hubwindenantriebe, Kettenantriebe oder Radantriebe in dieser Weise realisiert sein. Dabei wird regelmäßig die Hydraulikpumpe von einem Antriebsaggregat, wie beispielsweise einem Verbrennungsmotor, her angetrieben. Der von der Pumpe erzeugte Hydraulikstrom wird von dem damit gekoppelten Hydraulikmotor in die entsprechende Stellbewegung umgesetzt. Um die entsprechende Stellbewegung präzise und stabil zu steuern, muss die Drehzahl des Hydraulikmotors entsprechend geregelt werden, wobei hier das Fördervolumen der Hydraulikpumpe und das Schluckvolumen des Hydraulikmotors verstellt werden können, beispielsweise indem verstellbare Schrägscheibenausführungen dieser Komponenten verwendet werden, wobei jedoch auch andere Ausführungen möglich sind. Dabei soll einerseits bei entsprechenden Fahr- bzw. Steuerbefehlen ein schnelles Ansprechen des Systems erreicht werden. Andererseits kann ein zu schnelles Betätigen der Stellorgane bzw. ein Übersteuern derselben zu Instabilitäten des Antriebssystems führen.

Baumaschinen wie Krane, Raupen und dergleichen, die einen Radantrieb oder auch einen Kettenantrieb aufweisen können, werden dabei regelmäßig auf Untergründen, wie beispielsweise Schotterstrecken, Lehm- oder Kiesböden oder allgemein Erdreich ohne Oberflächenbeschichtung bewegt, die oft nur eine unzureichende Traktion mit sich bringen. Dies bringt die entsprechenden Traktionsprobleme beim Beschleunigen und Bremsen mit sich. Um hier Abhilfe zu schaffen, werden häufig Differentialsperren eingesetzt, die die Antriebsräder bzw. -ketten der linken Spur mit den Antriebsrädern der rechten Spur mechanisch zwangsweise koppeln. Dies bringt jedoch wiederum Probleme beim Kurvenfahren mit sich, insbesondere auf Böden mit höherer Traktion. Der durch Differentialsperren induzierte Schlupf führt zu vorzeitigem Verschleiß sowohl des fahrbaren Belags als auch der entsprechenden Antriebselemente.

Die Schrift US 2003/0111288 beschreibt ein Verfahren sowie eine Vorrichtung zur Regelung des Antriebsschlupfes für ein Fahrzeug mit hydraulischem Antrieb, der hydrostatisch ausgebildet ist und für jedes der Antriebsräder einen separaten Hydraulikmotor vorsieht. Die die Hydraulikmotoren versorgende Pumpe ist mit einem elektrisch gesteuerten Durchflussregler verbunden, der die individuelle Durchflussmenge von der Pumpe zum jeweiligen Hydraulikmotor auf einen Oberwert begrenzt, der einer maximalen Radgeschwindigkeit entspricht, die 0 bis 10% einer vorab berechneten Soll-Geschwindigkeit jedes der hydraulischen Antriebsräder entspricht.

Der vorliegenden Erfindung liegt hiervon ausgehend die Aufgabe zugrunde, ein verbessertes Verfahren sowie eine verbesserte Vorrichtung zur Regelung eines Antriebssystems der eingangs genannten Art zu schaffen, die Nachteile des Standes der Technik vermeiden und letzteren in vorteilhafter Weise weiterbilden. Vorzugsweise soll eine verbesserte Antriebsregelung geschaffen werden, die die Effizienz des Antriebs erhöht, Radverschleiß reduziert und die Traktion erhöht.

Erfindungsgemäß wird diese Aufgabe durch ein Verfahren nach Anspruch 1, eine Vorrichtung gemäß Anspruch 12 sowie durch einen Kran bzw. eine Baumaschine gemäß Anspruch 13 gelöst. Bevorzugte Ausgestaltungen der Erfindung sind Gegenstand der abhängigen Ansprüche.

Es wird also einerseits eine Regelung vorgeschlagen, die eine intelligente Differentialsperre zwischen einem linken Antriebsrad und einem rechten Antriebsrad bewirkt, die auch bei Kurvenfahrten ein Verspannen der angetriebenen Räder gegeneinander vermeidet und dennoch eine Drehzahlkoppelung der beiden Räder auch bei Traktionsproblemen sicherstellt. Andererseits wird nach einem weiteren Aspekt der Erfindung eine Regelung vorgeschlagen, die einen Schlupf eines Antriebsrades bzw. -elements zuverlässig unterbindet bzw. begrenzt und hierdurch die Effizienz des Antriebs erhöht und Verschleiß vermindert. Dabei wird der vorgegebene Leistungsgrenzwert, in Abhängigkeit dessen das zumindest eine Stellsignal für die zumindest eine Antriebseinheit bereitgestellt wird, in Abhängigkeit eines Abgleichs des vorgegebenen Soll-Werts des Abtriebsparameters mit einem aktuellen Ist-Wert des genannten Abtriebsparameters reduziert. Übersteigt die Differenz zwischen Soll-Wert und Ist-Wert des Abtriebsparameters eine vorbestimmte Toleranzschwelle, wird der Leistungsgrenzwert entsprechend reduziert, wodurch das Stellsignal entsprechend korrigiert wird.

Insbesondere kann der genannte Abtriebsparameter eine Abtriebsdrehzahl der Antriebseinheit und damit eine Raddrehzahl sein, wenn das anzutreibende Element ein Fahrwerksrad ist. Ein Fahrwerksrad kann dabei ein unmittelbar auf dem Boden abrollendes Rad sein, wenn ein Radantrieb vorgesehen ist. Das Fahrwerksrad kann jedoch auch ein Antriebsrad bzw. -ritzel sein, über das eine Antriebskette läuft. Liegt also die Differenz zwischen der Soll-Drehzahl und der Ist-Drehzahl des jeweiligen Antriebsrades über einem zugelassenen Toleranzwert, wird der Leistungsgrenzwert entsprechend reduziert, um das Stellsignal für die Antriebseinheit entsprechend zurückzufahren. Hierdurch kann Schlupf vermieden werden. Die Schlupfvermeidung kann dabei sowohl beim Beschleunigen als auch beim Abbremsen erzielt werden, indem als Leistungsgrenzwert einerseits ein maximaler Leistungswert für die bereitzustellende Leistung und andererseits ein maximaler Leistungswert für die rückzuführende Leistung in der genannten Weise in Abhängigkeit des Abgleichs zwischen Soll-Wert und Ist-Wert des Abtriebsparameters reduziert wird.

Vorteilhafterweise wird dabei der genannte Soll-Wert des Abtriebsparameters in Abhängigkeit des Ist-Werts eines entsprechenden Abtriebsparameters einer weiteren Antriebseinheit für ein weiteres anzutreibendes Element bestimmt. Ist der Abtriebsparameter in der vorgenannten Weise eine Raddrehzahl bzw. eine Abtriebsdrehzahl der Antriebseinheit, kann insbesondere die Soll-Drehzahl der einen Antriebseinheit, die das eine Rad antreibt, in Abhängigkeit des Ist-Werts der Abtriebsdrehzahl der anderen Antriebseinheit, die das andere Rad antreibt, bestimmt werden. Die Regelung zur Vermeidung von Radschlupf, sei es Durchdrehen oder Blockieren, beruht dabei also auf dem Prinzip, dass die tatsächlich auftretenden Drehzahlen vorab bestimmt werden. Bei einer Fahrt in gerader Richtung müssen die Drehzahlen der anzutreibenden Räder in etwa identisch sein, bei Kurvenfahrt unterscheiden sich die Drehzahlen je nach Lenkradius des Fahrzeugs. Es kann somit insbesondere von einer gemessenen Ist-Drehzahl des rechten Rades auf die erforderliche Soll-Drehzahl des linken Rades und umgekehrt gerechnet werden. Liegt die hierdurch bestimmte Soll-Drehzahl eines Rades zu weit von der tatsächlichen Ist-Drehzahl dieses Rades weg, ist dies ein Signal, dass ein unzulässiger Schlupf vorliegt. Dementsprechend wird in der vorgenannten Weise der Leistungsgrenzwert, der in die Bestimmung des Stellsignals eingeht, verändert.

Unterschreitet die Ist-Drehzahl des jeweiligen Rades die in der genannten Weise bestimmte Soll-Drehzahl nebst Toleranzschwelle, dann muss die maximal verfügbare Bremsleistung der zugehörigen Antriebseinheit reduziert werden, damit das Rad wieder Drehzahl aufnehmen kann. Dies geschieht durch temporäre Reduzierung der Vorgabe der maximalen rückzuführenden Leistung der entsprechenden Antriebseinheit.

Überschreitet hingegen die Ist-Drehzahl des jeweiligen Rades die in der genannten Weise bestimmte Soll-Drehzahl nebst Toleranzschwelle, dann muss die maximal zur Verfügung stehende Leistung auf dieser Antriebseinheit reduziert werden, damit das Rad wieder gebremst wird und die gewünschte Drehzahl annehmen kann. Dies wird durch eine Reduzierung der Vorgabe der maximalen Leistungsabgabe bewerkstelligt.

Die Beschränkung der vorgegebenen Leistungswerte bleibt dabei so lange aufrecht, bis sich die Drehzahl des jeweiligen Antriebsrades wieder innerhalb einer vorbestimmten Toleranzschwelle befindet. Anschließend werden die vorgegebenen Leistungswerte wieder auf Nominalwerte gesetzt, welche von übergeordneten Einheiten vorgegeben werden können.

Alternativ oder zusätzlich zur Bestimmung des Soll-Werts des Abtriebsparameters der einen Antriebseinheit in Abhängigkeit des Ist-Wertes des entsprechenden Abtriebsparameters der anderen Antriebseinheit kann der genannte Soll-Wert auch in Abhängigkeit von Sensorsignalen bestimmt werden, die insbesondere die Geschwindigkeit des von dem jeweiligen Antriebselement angetriebenen Geräts wiedergeben. Insbesondere kann der genannte Soll-Wert des Abtriebsparameters der zu regelnden Antriebseinheit in Abhängigkeit der tatsächlichen Fahrgeschwindigkeit bestimmt werden, die in Weiterbildung der Erfindung über einen Drehzahlsensor an einem nicht angetriebenen Rad und/oder einen Beschleunigungssensor und/oder einen anderen Geschwindigkeitssensor bestimmt werden kann. Hierdurch kann überprüft werden, ob sämtliche anzutreibenden Elemente Schlupf aufweisen, insbesondere das gesamte Fahrzeug rutscht. Insbesondere kann damit der spezielle Fall von beidseitiger Blockade beider Antriebssysteme bzw. von beidseitigem Durchdrehen beider Räder detektiert werden. Sollte dieser Fall auftreten, kann gleichzeitig die entsprechende Leistungsvorgabe für beide Antriebseinheiten reduziert werden. Damit werden beide bzw. alle Antriebseinheiten automatisch verzögert bzw. beschleunigt, um in den im wesentlichen schlupffreien und damit effizienten Arbeitsbereich zu gelangen.

Um bei Kurvenfahrten eine optimale Traktion zu erreichen, wird vorgesehen, dass in Abhängigkeit eines Lenkwinkels für jedes anzutreibende Rad bzw. die zugehörige Antriebseinheit eine separate Soll-Drehzahl vorgegeben und in Abhängigkeit der separaten Soll-Drehzahlen für jede Antriebseinheit separate Stellsignale bereitgestellt werden. Damit kann eine starre Kopplung der Antriebsräder der rechten Seite mit den Antriebsrädern der linken Seite erzwungen werden, ohne ein Verspannen der Antriebsräder untereinander zu erreichen. Der erfindungsgemäße Gedanke liegt dabei darin, dass aufgrund eines bekannten Lenkwinkels des Lenkrades bzw. der Lenkräder die geometrischen Beziehungen für eine korrekte Kurvenfahrt aufgelöst werden können und somit die erforderlichen Raddrehzahlen an den beiden antreibenden Rädern definitiv vorab berechnet und somit die entsprechenden Soll-Drehzahlen für die Regelkreise der Antriebseinheiten vorgegeben werden können. Bei Geradeausfahrt müssen beide Räder mit derselben Drehzahl angetrieben werden, während bei Kurvenfahrt das kurvenäußere Rad entsprechend schneller als das kurveninnere Rad angetrieben werden muss. In beiden Fällen werden definitiv Soll-Drehzahlen für die Antriebseinheiten rechts und links eingeprägt, so dass die rechten und linken Räder im Prinzip wie durch eine Differentialsperre miteinander gekoppelt sind. Würde eines der beiden Antriebsräder durchdrehen, weil z. B. der Untergrund zu glatt wird, um die Antriebsleistung zu übertragen, wird dessen Antriebsleistung heruntergeregelt, da eine feste Soll-Drehzahl vorgegeben ist. In Abhängigkeit des Lenkwinkels wird ein festes Verhältnis zwischen der Soll-Drehzahl der linken und rechten Räder vorgegeben. Hierdurch kann es zu keinem übermäßigen Schlupf bei Untergründen mit schlechter Haftung kommen, sei es eine unzulässige Drehzahlerhöhung durch zu hohe Antriebsleistung oder eine zu niedrige Drehzahl in Folge zu hoher Bremsleistung.

In der zuvor genannten Weise kann dabei die Soll-Drehzahl beispielsweise in Abhängigkeit einer Fahrgeschwindigkeit des Geräts, die über einen Drehzahlsensor an einem nicht angetriebenen Rad, einen Beschleunigungssensor oder einen anderen Geschwindigkeitssensor bestimmt werden kann, bestimmt werden, um dem ebenfalls vorgenannte Problem zu begegnen, dass beide angetriebenen Räder rechts und links durchdrehen bzw. zu stark bremsen.

Durch die vorgenannte Reduzierung der Leistungsvorgaben können in entsprechender Weise die erzeugten Stellsignale zurückgeführt werden, um die von der jeweiligen Antriebseinheit erzeugte Leistung und/oder die in die jeweilige Antriebseinheit rückgeführte Leistung entsprechend zu begrenzen bzw. zu reduzieren. Insbesondere können dabei hydraulische Antriebseinheiten vorzugsweise mit einem geschlossenen Hydraulikkreis umfassend eine Hydraulikpumpe und einen Hydraulikmotor vorgesehen sein.

Vorteilhafterweise wird dabei der jeweils vorgegebene Leistungswert und der jeweils aktuelle Leistungswert einem Regler zugeführt, von dem ein übergeordnetes Steuersignal bereitgestellt wird, in Abhängigkeit dessen das Stellsignal für die Stellorgane der Hydraulikkomponenten reduziert bzw. begrenzt wird.

Gemäß einer vorteilhaften Ausführung der Erfindung werden die Stellsignale für die Hydraulikkomponenten des Hydraulikkreises sowohl in Abhängigkeit eines vorgegebenen Leistungswertes für die vom System bereitgestellte Leistung als auch in Abhängigkeit eines vorgegebenen Leistungswerts für die in das System rückgeführte Leistung begrenzt bzw. reduziert. Das Stellsignal kann dabei insbesondere einerseits in Abhängigkeit eines Abgleichs des aktuellen Pumpenleistungswerts mit einem vorgegebenen maximalen Leistungswert für die bereitzustellende Leistung und andererseits in Abhängigkeit eines Abgleichs des aktuellen Motorleistungswerts mit einem vorgegebenen maximalen Leistungswert für die rückzuführende Leistung begrenzt und/oder reduziert werden. Hierdurch kann einerseits sichergestellt werden, dass die vom Hydraulikkreis bereitgestellte Leistung nicht über das Ziel hinausschießt, während andererseits erreicht wird, dass das vom Hydraulikkreis bereitgestellte Bremsmoment im Einklang mit den hierfür vorgesehenen Leistungsvorgaben ist.

Die Stellsignale für die Hydraulikkomponenten können grundsätzlich in Abhängigkeit verschiedener Abtriebsparameter bestimmt werden. Insbesondere kann in Weiterbildung der Erfindung die Drehzahl des Hydraulikmotors der Abtriebsparameter sein, in Abhängigkeit dessen die Stellsignale bereitgestellt werden.

Vorteilhafterweise wird dabei das Stellsignal in Abhängigkeit des Signals eines Reglers erzeugt, dem der Soll-Wert und der Ist-Wert des genannten Arbeitsparameters zugeführt werden. Im Falle der Drehzahl des Hydraulikmotors wird also das Stellsignal von einem Drehzahlregler erzeugt und sonach in der vorgeschriebenen Weise begrenzt bzw. reduziert.

Erfindungsgemäß wird das Stellsignal in Abhängigkeit eines Vorsteuerungssignals erzeugt, das in Abhängigkeit des Soll-Werts des genannten Abtriebsparameters und einem Ist-Wert einer Ist-Drehzahl der Hydraulikpumpe bestimmt wird. Bei vorgegebener Ist-Drehzahl der Hydraulikpumpe einerseits und andererseits einer vorbestimmten Soll-Drehzahl des Hydraulikmotors kann hieraus der Hydraulikkreis auf ein bestimmtes Übersetzungsverhältnis eingestellt werden, das über bestimmte Stellsignale erzielbar ist.

Vorteilhafterweise umfasst der Stellsignalkreis einerseits die genannte Vorsteuerung und andererseits die oben genannte Regelung, so dass sozusagen über die Vorsteuerung das Stellsignal grob vorgegeben wird und über den Regler feine Abweichungen ausgeglichen werden können.

In Weiterbildung der Erfindung wird dabei ein zunächst dimensionsloses Stellsignal bereitgestellt, das sodann in Abhängigkeit des Abgleichs des jeweils vorgegebenen Leistungswerts mit dem zugehörigen aktuellen Leistungswert des Hydraulikkreises begrenzt bzw. reduziert wird, und schließlich von einer Ansteuerstufe auf das jeweilige Stellorgan des Hydraulikkreises gegeben wird.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Draufsicht auf ein Flurförderfahrzeug mit einem hydraulischen Fahrantriebssystem mit zwei angetriebenen Rädern nach einer bevorzugten Ausführung der Erfindung,
- Fig. 2:: eine schematische Darstellung der beiden separaten hydraulischen Antriebseinheiten mit jeweils einem geschlossenen Hydraulikkreis für das linke angetriebene Rad und das rechte angetriebene Rad des Flurförderfahrzeugs aus Fig. 1,
- Fig. 3:: eine schematische Darstellung einer Unter-Regelvorrichtung zur Regelung der Antriebseinheiten aus Fig. 2, und
- Fig. 4:: eine schematische Darstellung einer konkreten Ausbildung eines Reglers zur Erzeugung der Stellsignale für die Antriebseinheiten aus Fig. 2, mit Hilfe dessen die in Fig. 3 dargestellte Regelung verwirklicht wird.

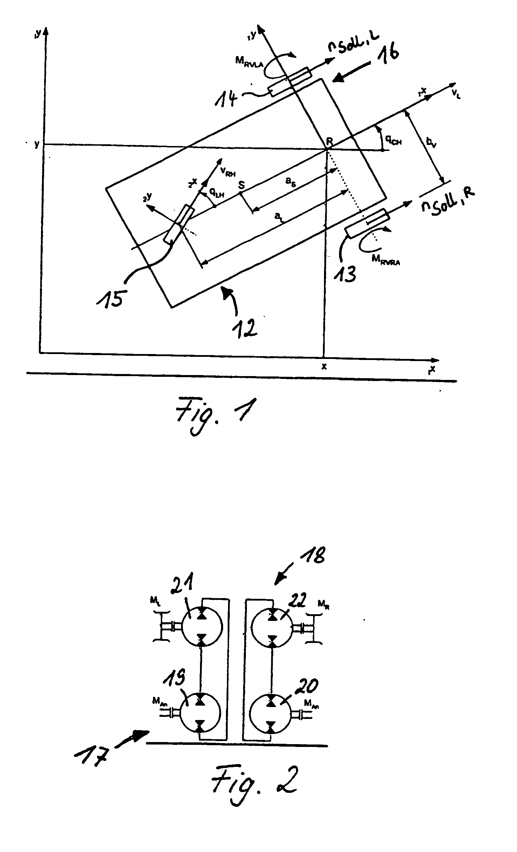

In Figur 1 ist ein Flurförderfahrzeug 12 in Form eines dreirädrigen Gabelstaplers dargestellt, der ein rechtes angetriebenes Rad 13 sowie ein linkes angetriebenes Rad 14 sowie ein steuerbares drittes Rad 15 aufweist. Es versteht sich, dass die Erfindung jedoch auch in anderen Baumaschinen, wie Kranen, Raupen oder dergleichen, implementiert sein kann, insbesondere dass anstelle des dargestellten Räderfahrwerks 16 auch ein Kettenfahrwerk oder dergleichen vorgesehen sein kann.

Das in Figur 1 gezeigte Fahrzeug 12 wird auf der linken und rechten vorderen Antriebsseite getrennt durch eigenständige Antriebseinheiten 17 und 18 angetrieben, die gemäß Figur 2 vorteilhafterweise jeweils geschlossene Hydraulikkreise mit jeweils einer Hydraulikpumpe 19, 20 und einem Hydraulikmotor 21 und 22 ausgebildet sein können. Die Hydraulikpumpen 19 und 20 können in vorteilhafter Weise von einem gemeinsamen Antriebsaggregat, vorzugsweise in Form eines Verbrennungsmotors, angetrieben sein.

Wie Figur 1 zeigt, kann aufgrund eines bekannten Lenkwinkels q_{LH} an dem Steuerrad 15 die Geometrie für eine korrekte Kurvenfahrt aufgelöst werden, so dass die erforderlichen Raddrehzahlen an den beiden anzutreibenden Rädern 13 und 14 vorab berechnet und entsprechende Soll-Drehzahlen n_{Soll}, _{R} und n_{Soll}, _{L} bestimmt werden können. Hierzu kann über einen nicht eigens dargestellten Fahrgeschwindigkeitssensor die Fahrgeschwindigkeit des Fahrzeugs 12 bestimmt werden, beispielsweise kann die Drehzahl des nicht angetriebenen Steuerrades 15 erfasst werden. Über die dargestellten Geometriebeziehungen kann die entsprechende Soll-Drehzahl des linken und rechten Vorderrades 13 bzw. 14 errechnet werden.

Die hieraus bestimmten Soll-Drehzahlen n_{Soll}, _{R} und n_{Soll}, _{L} werden einem Regler zugeführt, der hieraus Stellsignale für die Antriebseinheiten 17 und 18 generiert, so dass jedes Rad rechts und links individuell mit der für die jeweilige Kurvenfahrt richtigen Drehzahl angetrieben wird. Da für beide Antriebseinheiten 17 und 18 separate Soll-Drehzahlen vorgegeben werden bzw. ein festes Verhältnis zwischen den beiden Soll-Drehzahlen vorgegeben wird, werden die beiden Räder 13 und 14 hinsichtlich ihrer Drehzahl miteinander gekoppelt, wie es bei einer Differentialsperre der Fall ist, allerdings wird ein Verspannen der beiden Räder gegeneinander verhindert, da eben unterschiedliche Drehzahlen vorgegeben werden.

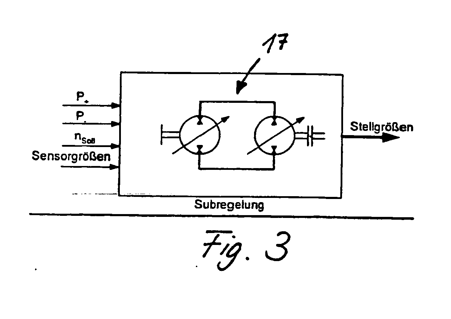

Die Ansteuerung der Antriebseinheiten 17 und 18 kann dabei vorteilhafterweise über eine definierte Regelungsstruktur erfolgen, wie sie Figur 3 zeigt. Der darin gezeigte unterliegende Regler kann im wesentlichen durch drei Parameter beeinflusst werden, die in Kombination mit einem darüber stehenden Konzept Funktionalitäten, wie z. B. eine Anti-Schlupfregelung oder ein Anti-Blockiersystem, implementieren kann. Wie Figur 3 zeigt, sind die dem unterliegenden Regler 23 zugeführten Größen die Soll-Drehzahl an der Abtriebswelle n_{Soll}, die in der vorgenannten Weise für jedes Rad separat vorgegeben werden kann, sodann eine Leistungsvorgabe P₊, die der maximalen der Abtriebswelle zugeführten Leistung entspricht, und eine weitere Leistungsvorgabe P₋, die der maximal an den Antrieb rückführbaren Rückleistung entspricht. Die weiterhin dargestellten Sensorgrößen können beispielsweise Signale des Fahrgeschwindigkeitssensors, jeweiliger Drehzahlsensoren zur Erfassung der Ist-Drehzahl der beiden angetriebenen Räder 13 und 14, eines Beschleunigungssensors und/oder weiterer Geschwindigkeitssensoren oder ein Lenkwinkelsensor zur Erfassung des Lenkwinkels q_{LH} sein.

Die prinzipielle Realisierung von ABS bzw. ASR beruht nun darauf, dass die tatsächlich auftretenden Drehzahlen vorab bestimmt werden können. Bei einer Fahrt in gerader Richtung müssen die Drehzahlen in etwa identisch sein, bei Kurvenfahrt unterscheiden sich die Drehzahlen je nach Lenkradius des Fahrzeuges. Es kann somit von der gemessenen Drehzahl des rechten Rades auf die erforderliche aktuelle Drehzahl des linken Rades gerechnet werden. Liegt nun diese Drehzahl des linken Rades über bzw. unterhalb einer Toleranzschwelle, so müssen entsprechende Maßnahmen getätigt werden:

Unterschreitet die Drehzahl des linken Rades die Toleranzschwelle (ABS), dann muss die maximal verfügbare Bremsleistung auf der linken Antriebsseite reduziert werden, damit das Rad wieder Drehzahl aufnehmen kann. Dies geschieht durch temporäre Reduzierung der Vorgabe der maximalen Rückleistung der Subregelung P₋.

Überschreitet die Drehzahl des linken Rades die Toleranzschwelle (ASR), dann muss die maximal zur Verfügung stehende Leistung auf der linken Antriebsseite reduziert werden, damit das Rad wieder gebremst wird und die gewünschte Drehzahl annehmen kann. Dies wird durch Reduzierung der Vorgabe der maximalen Leistungsabgabe P₊ der Subregelung bewerkstelligt.

Die Beschränkung der Leistungen für den Subregler bleibt solange aufrecht, bis sich die Drehzahl des linken Rades innerhalb der Toleranzschwelle befindet. Anschließend werden die entsprechenden Leistungen wieder auf die Nominalwerte, welche von übergeordneten Einheiten vorgegeben werden, gesetzt.

Dieses Schema wird symmetrisch für die rechte Antriebsseite ebenfalls verwendet.

Durch zusätzliche Sensoren, mit der die tatsächliche Fahrgeschwindigkeit bestimmt werden kann (z. B. Drehzahlsensor an drittem Rad, Beschleunigungssensoren, ...) kann zusätzlich überprüft werden, ob das gesamte Fahrzeug rutscht. Damit kann der spezielle Fall von beidseitiger Blockade beider Antriebssysteme bzw. beidseitigem Durchdrehen beider Räder detektiert werden. Sollte dieser Fall auftreten, dann kann nun gleichzeitig auf beiden Antriebsseiten die entsprechende maximale Leistungsvorgabe reduziert werden. Damit werden beide Antriebsräder automatisch verzögert bzw. beschleunigt, um in den effizienteren Arbeitsbereich zu gelangen.

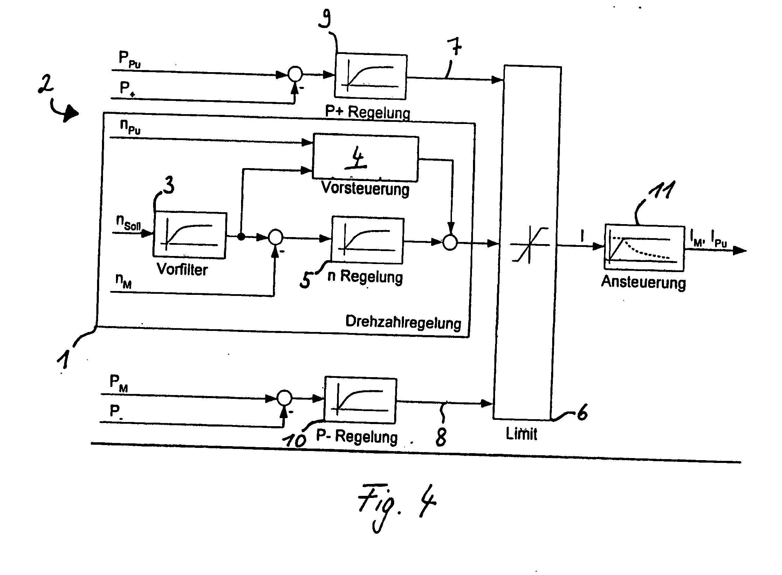

Konkret kann die Stellsignalerzeugung dabei entsprechend der Figur 4 erfolgen. Der in Figur 4 dargestellte Regelkreisabschnitt 1 der Regelvorrichtung 2 dient der Erzeugung eines dimensionslosen Stellsignals I und ist in der gezeichneten Ausführung als Drehzahlregelung ausgebildet. Eine in Abhängigkeit diverser Randbedingungen bestimmbare Soll-Drehzahl n_{Soll} des Hydraulikmotors wird zunächst durch einen Vorfilter 3 gegeben und zusammen mit der Ist-Drehzahl n_{Pu} der Hydraulikpumpe in einen Vorsteuerbaustein 4 gegeben, der über die bekannten Größen des geschlossenen Hydraulikkreises einschließlich Pumpengröße, Motorgröße und Drehzahl bzw. Drehzahlverhältnissen ein dimensionsloses Stellsignal I berechnet. Andererseits wird das gefilterte Signal n_{Soll}, das die Soll-Drehzahl des Hydraulikmotors wiedergibt, zusammen mit der Ist-Drehzahl n_{M} des Hydraulikmotors einem Drehzahlregler 5 zugeführt, um entsprechende Abweichungen zwischen Stellsignal und erzielter Drehzahl zu kompensieren. Aus der genannten Vorsteuerung und der Drehzahlregelung zusammen wird das genannte dimensionslose Stellsignal I erzeugt.

Dieses dimensionslose Stellsignal I wird in einem Steuerungsbaustein 6 begrenzt bzw. reduziert, und zwar in Abhängigkeit von übergeordneten Steuerungssignalen 7 und 8, die aus entsprechenden übergeordneten Leistungsreglern 9 und 10 kommen.

Dem übergeordneten Leistungsregler 9 wird dabei einerseits die aktuelle dem Hydraulikkreis zugeführte Leistung P_{Pu} und andererseits der vorgegebene Leistungswert P₊ zugeführt, die von dem Regler 9 miteinander abgeglichen werden. Der vorgegebene Leistungswert P₊ kann dabei in der zuvor beschriebenen Weise bestimmt werden, beispielsweise kann er als die maximale zur Verfügung stehende Leistung des Antriebsaggregats festgesetzt werden. Überschreitet der aktuelle Leistungswert P_{Pu} den vorgegebenen Leistungswert P₊, wird von dem Steuerungsbaustein 6 das erzeugte dimensionslose Stellsignal I entsprechend reduziert, damit die Stellorgane der Hydraulikpumpe und des Hydraulikmotors nicht in Stellbereiche hineingefahren werden, die die aktuelle Leistung P_{Pu} größer werden ließen als die vorgegebene Leistung P₊.

Sozusagen spiegelbildlich umgekehrt erfolgt ein Abgleich der jeweils aktuell am Hydraulikmotor rückgeführten Leistung P_{M} mit einem entsprechend vorgegebenen Leistungswert P₋, der ebenfalls wie eingangs beschrieben in verschiedener Weise bestimmt werden kann, beispielsweise als das maximale Bremsmoment festgesetzt werden kann, das der Hydraulikmotor nicht überschreiten soll.

Die vorgegebenen Leistungswerte P₊ und P₋ werden dabei in der eingangs genannten Weise in Abhängigkeit eines Abgleichs der jeweils vorgegebenen Soll-Drehzahl des rechten Rades 13 bzw. des linken Rades 14 und der jeweils tatsächlichen Ist-Drehzahl reduziert. Konkret wird die maximal an der Abtriebswelle abzugebende Leistung P₊ reduziert, wenn ein übermäßiges Durchdrehen relativ zur vorgegebenen Soll-Drehzahl des jeweiligen Rades festgestellt wird. Die maximal in die Antriebseinheit rückführbare Leistung P₋ wird hingegen reduziert, wenn ein Blockieren bzw. ein übermäßiges Zurückbleiben der Drehzahl des jeweiligen Rades gegenüber der vorgegebenen Soll-Drehzahl festgestellt wird.

## Patentansprüche

1. Verfahren zur Steuerung eines Fahrantriebs, insbesondere eines hydraulischen Fahrantriebs eines Krans, eines Flurförderfahrzeugs, einer Raupe oder eine Baumaschine, der zumindest zwei separate Antriebseinheiten (17; 18) für ein linkes Rad (13) und ein rechtes Rad (14) aufweist, wobei jeweils eine Soll-Drehzahl (n_{Soll, R}; n_{Soll, L}) für die beiden Räder (13; 14) vorgegeben und in Abhängigkeit der vorgegebenen Soll-Drehzahl zumindest ein Stellsignal für die Antriebseinheiten bereitgestellt wird, wobei in Abhängigkeit eines Lenkwinkels (q_{LH}) für jedes Rad (13; 14) eine separate Soll-Drehzahl (n_{Soll, L}; n_{Soll, R}) vorgegeben und in Abhängigkeit der separaten Soll-Drehzahlen für jede Antriebseinheit (17; 18) separate Stellsignale bereitgestellt werden, wobei zumindest eine Antriebseinheit (17, 18) einen geschlossenen Hydraulikkreis mit einer Hydraulikpumpe (19, 20) und einem Hydraulikmotor (21, 22) umfasst, wobei das Stellsignal (I) in Abhängigkeit eines Abgleichs des vorgegebenen Leistungswerts (P₊; P₋) mit einem aktuellen Leistungswert (P_{Pu}) der Antriebseinheit (17, 18) von einem übergeordneten Steuerungsbaustein (6) reduziert wird,
**dadurch gekennzeichnet,**
**dass** das genannte Stellsignal (I) in Abhängigkeit eines Vorsteuerungssignals bereitgestellt wird, das in Abhängigkeit der jeweiligen Solldrehzahl (n_{Soll, R}; n_{Soll, L}) und einer Ist-Drehzahl (n_{Pu}) der Hydraulikpumpe bestimmt wird.

2. Verfahren nach dem vorhergehenden Anspruch, wobei die Stellsignale für die Antriebseinheiten jeweils in Abhängigkeit der vorgegebenen Soll-Drehzahlen (n_{Soll, L}; n_{Soll, R}) und eines jeweils vorgegebenen Leistungsgrenzwerts (P₊; P₋) bestimmt werden, wobei der jeweils vorgegebene Leistungsgrenzwert (P₊; P₋) in Abhängigkeit eines Abgleichs der jeweiligen Soll-Drehzahl (n_{Soll, R}; n_{Soll, L}),mit einer jeweils aktuellen Ist-Drehzahl des jeweiligen Rades (13; 14) reduziert wird.

3. Verfahren nach dem vorhergehenden Anspruch, wobei die separaten Soll-Drehzahlen (n_{Soll, R}, n_{Soll, L}) in Abhängigkeit einer gewünschten Fahrgeschwindigkeit bestimmt werden.

4. Verfahren nach einem der vorhergehenden Ansprüche, wobei das zumindest eine Stellsignal auch zur Einstellung des Hydraulikmotors (21, 22), insbesondere zur Einstellung des Schluckvolumens des Hydraulikmotors, vorgesehen ist.

5. Verfahren nach dem vorhergehenden Anspruch, wobei der vorgegebene Leistungswert (P₊; P₋) und der aktuelle Leistungswert (P_{Pu}; P_{M}) einem Regler (9; 10) zugeführt werden, von dem ein übergeordnetes Steuersignal (7; 8) bereitgestellt wird, in Abhängigkeit dessen das Stellsignal (I) reduziert und/oder begrenzt wird.

6. Verfahren nach einem der vorhergehenden Ansprüche, wobei das Stellsignal (I) einerseits in Abhängigkeit eines Abgleichs eines aktuellen Pumpenleistungswerts (P_{Pu}) mit einem vorgegebenen maximalen Leistungswerts für die bereitzustellende Leistung und andererseits in Abhängigkeit eines Abgleichs eines aktuellen Motorleistungswerts (P_{M}) mit einem vorgegebenen maximalen Leistungswert für die rückzuführende Leistung begrenzt und/oder reduziert wird.

7. Verfahren nach einem der vorhergehenden Ansprüche, wobei das Stellsignal (I) in Abhängigkeit des Signals eines Reglers (5) bereitgestellt wird, dem die Soll-Drehzahl und die Ist-Drehzahl zugeführt werden.

8. Verfahren nach einem der vorhergehenden Ansprüche, wobei das genannte Vorsteuerungssignal in Abhängigkeit eines Ist-Werts (n_{Pu}; n_{M}) eines Betriebsparameters des Hydraulikmotors bestimmt wird.

9. Verfahren nach einem der vorhergehenden Ansprüche, wobei das Stellsignal (I) zunächst dimensionslos bereitgestellt, sodann in Abhängigkeit des Abgleichs des vorgegebenen Leistungswerts (P₊; P₋) mit dem jeweils aktuellen Leistungswert (P_{Pu}; P_{M}) begrenzt und/oder reduziert wird, und sodann von einer Ansteuerstufe (11) auf das jeweilige Stellorgan des geschlossenen Hydraulikkreises gegeben wird.

10. Verfahren nach dem vorhergehenden Anspruch, wobei die Ansteuerstufe (11) ein Stellsignal (I_{M}) für den Hydraulikmotor und ein Stellsignal (I_{Pu}) für die Hydraulikpumpe bereitstellt.

11. Verfahren nach dem vorhergehenden Anspruch, wobei die Soll-Drehzahl (n_{Soll, R}; n_{Soll}, _{L}) der zweiten Antriebseinheit (17; 18) in Abhängigkeit der Ist-Drehzahl der ersten Antriebseinheit (17; 18) bestimmt wird.

12. Regelvorrichtung zur Regelung eines Antriebssystems, insbesondere eines hydraulischen Fahrantriebs eines Krans, einer Raupe, eines Flurförderers oder einer Baumaschine, das zumindest zwei Antriebseinheiten (17; 18) für ein linkes Rad (13) und ein rechtes Rad (14) aufweist, mit einem Steuerkreis zur Bereitstellung zumindest eines Stellsignals für die zumindest zwei Antriebseinheiten (17; 18) in Abhängigkeit einer Soll-Drehzahl sowie eines Leistungsgrenzwerts für die zumindest zwei Antriebseinheiten (17; 18), **gekennzeichnet durch** einen Steuerungsbaustein zur Bereitstellung des Stellsignals (I) in Abhängigkeit eines Vorsteuerungssignals, das in Abhängigkeit der jeweiligen Solldrehzahl (n_{Soll, R}; n_{Soll}, _{L}) und einer Ist-Drehzahl (n_{Pu}) der Hydraulikpumpe bestimmt wird.

13. Kran, Raupe, Flurförderer oder Baumaschine mit einer Regelvorrichtung nach Anspruch 12.

## Claims

1. A method for controlling a traveling drive, in particular a hydraulic traveling drive of a crane, an industrial truck, a caterpillar or a construction machine, which includes at least two separate drive units (17; 18) for a left wheel (13) and a right wheel (14), wherein a desired rotational speed (n_{des,R}; n_{des,L}) for the two wheels (13; 14) each is specified and in dependence on the specified desired rotational speed at least one actuating signal is provided for the drive units, wherein in dependence on a steering angle (q_{LH}) for each wheel (13; 14) a separate desired rotational speed (n_{des,L}; n_{des,R}) is specified and in dependence on the separate desired rotational speeds separate actuating signals are provided for each drive unit (17; 18), wherein at least one drive unit (17, 18) comprises a closed hydraulic circuit with a hydraulic pump (19, 20) and a hydraulic motor (21, 22), wherein the actuating signal (I) is reduced by a superordinate control module (6) in dependence on a matching of the specified power value (P₊; P₋) with a current power value (P_{Pu}) of the drive unit (17, 18),
**characterized in**
**that** said actuating signal (I) is provided in dependence on a pilot control signal which is determined in dependence on the respective desired rotational speed (n_{des,R}; n_{des,L}) and an actual rotational speed (n_{Pu}) of the hydraulic pump.

2. The method according to the preceding claim, wherein the actuating signals for the drive units each are determined in dependence on the specified desired rotational speeds (n_{des,L}; n_{des,R}) and a respectively specified power limit value (P₊; P₋), wherein the respectively specified power limit value (P₊, P₋) is reduced in dependence on a matching of the respective desired rotational speed (n_{des,R}; n_{des,L}) with a respectively current actual rotational speed of the respective wheel (13; 14).

3. The method according to the preceding claim, wherein the separate desired rotational speeds (n_{des,R}; n_{des,L}) are determined in dependence on a desired traveling speed.

4. The method according to any of the preceding claims, wherein the at least one actuating signal also is provided for adjusting the hydraulic motor (21, 22), in particular for adjusting the absorption volume of the hydraulic motor.

5. The method according to the preceding claim, wherein the specified power value (P₊; P₋) and the current power value (P_{Pu}; P_{M}) are supplied to a controller (9; 10) which provides a superordinate control signal (7; 8), in dependence on which the actuating signal (I) is reduced and/or limited.

6. The method according to any of the preceding claims, wherein the actuating signal (I) is limited and/or reduced on the one hand in dependence on a matching of a current pump power value (P_{Pu}) with a specified maximum power value for the power to be provided and on the other hand in dependence on a matching of a current motor power value (P_{M}) with a specified maximum power value for the power to be recirculated.

7. The method according to any of the preceding claims, wherein the actuating signal (I) is provided in dependence on the signal of a controller (5) to which the desired rotational speed and the actual rotational speed are supplied.

8. The method according to any of the preceding claims, wherein said pilot control signal is determined in dependence on an actual value (n_{Pu}; n_{M}) of an operating parameter of the hydraulic motor.

9. The method according to any of the preceding claims, wherein the actuating signal (I) initially is provided dimensionless, then is limited and/or reduced in dependence on the matching of the specified power value (P₊; P₋) with the respectively current power value (P_{Pu}; P_{M}), and then is provided by a driving stage (11) to the respective actuator of the closed hydraulic circuit.

10. The method according to the preceding claim, wherein the driving stage (11) provides an actuating signal (I_{M}) for the hydraulic motor and an actuating signal (I_{Pu}) for the hydraulic pump.

11. The method according to the preceding claim, wherein the desired rotational speed (n_{des,R}; n_{des,L}) of the second drive unit (17; 18) is determined in dependence on the actual rotational speed of the first drive unit (17; 18).

12. A control device for controlling a drive system, in particular a hydraulic traveling drive of a crane, a caterpillar, an industrial truck or a construction machine, which includes at least two drive units (17; 18) for a left wheel (13) and a right wheel (14), with a control circuit for providing at least one actuating signal for the at least two drive units (17; 18) in dependence on a desired rotational speed and a power limit value for the at least two drive units (17; 18), **characterized by** a control module for providing the actuating signal (I) in dependence on a pilot control signal which is determined in dependence on the respective desired rotational speed (n_{des,R}; n_{des,L}) and an actual rotational speed (n_{Pu}) of the hydraulic pump.

13. A crane, caterpillar, industrial truck or construction machine with a control device according to claim 12.

## Revendications

1. Procédé destiné à la commande d'un système d'entraînement, notamment d'un système d'entraînement hydraulique d'une grue, d'un chariot de manutention, d'un train à chenilles ou d'une machine de chantier, qui présente au moins deux unités d'entraînement séparées (17 ; 18) pour une roue gauche (13) et une roue droite (14), un régime théorique respectif (n_{Soll, R} ; n_{Soll, L}) étant prescrit pour les deux roues (13 ; 14) et en fonction du régime théorique prescrit, au moins un signal de puissance étant mis à disposition pour les unités d'entraînement, en fonction d'un angle de braquage (q_{LH}) pour chaque roue (13 ; 14), un régime théorique séparé (n_{Soll, L}; n_{Soll, R}) étant prescrit et en fonction des régimes théoriques séparés pour chaque unité d'entraînement (17 ; 18), des signaux de puissance séparés étant mis à disposition, au moins unité d'entraînement (17, 18) comportant un circuit hydraulique fermé avec une pompe hydraulique (19, 20) et un moteur hydraulique (21, 22), le signal de puissance (I) étant réduit en fonction d'un alignement de la valeur de puissance prescrite (P₊ ; P₋) avec une valeur de puissance actuelle (P_{Pu}) de l'unité d'entraînement (17, 18) d'un module de commande prioritaire (6),
**caractérisé en ce que**,
ledit signal de puissance (I) est mis à disposition en fonction d'un signal de commande pilote, qui est déterminé en fonction du régime théorique respectif (n_{Soll}, _{R} ; n_{Soll, L}) et d'un régime réel (n_{Pu}) de la pompe hydraulique.

2. Procédé selon la revendication précédente, les signaux de puissance étant déterminés pour les unités d'entraînement respectivement en fonction des régimes théoriques prescrits (n_{soll, L} ; n_{Soll, R}) et d'une valeur limite de puissance prescrite respective (P₊ ; P₋), la valeur limite de puissance prescrite respective (P₊ ; P₋) étant réduite en fonction d'un alignement du régime théorique respectif (n_{Soll, R} ; n_{Soll}, _{L}) avec un régime réel actuel respectif de la roue respective (13 ; 14).

3. Procédé selon la revendication précédente, les régimes théoriques séparés (n_{Soll}, _{R} ; n_{Soll, L}) étant déterminés en fonction d'une vitesse de conduite souhaitée.

4. Procédé selon une quelconque des revendications précédentes, au moins un signal de puissance étant également prévu pour le réglage du moteur hydraulique (21, 22) notamment pour le réglage du volume d'amortissement du moteur hydraulique.

5. Procédé selon une quelconque des revendications précédentes, la valeur de puissance prescrite (P₊ ; P₋) et la valeur de puissance actuelle (P_{Pu} ; P_{M}) étant alimentées dans au moins un régulateur (9 ; 10), à partir duquel un signal de commande prioritaire (7, 8) est mis à disposition, en fonction duquel le signal de puissance (I) est réduit et/ou limité.

6. Procédé selon une quelconque des revendications précédentes, le signal de puissance (I) étant limité et/ou réduit d'une part en fonction d'un alignement d'une valeur de puissance actuelle de pompe (n_{Pu}) avec une valeur de puissance maximale prescrite pour la puissance à mettre à disposition, et d'autre part en fonction d'un alignement d'une valeur de puissance actuelle de moteur (P_{M}) avec une valeur de puissance maximale prescrite pour la puissance à remettre en circulation.

7. Procédé selon une quelconque des revendications précédentes, le signal de puissance (I) étant mis à disposition en fonction du signal d'un régulateur (5), dans lequel le régime théorique et le régime réel sont alimentés.

8. Procédé selon une quelconque des revendications précédentes, ledit signal de commande pilote étant déterminé en fonction d'une valeur réelle (n_{Pu} ; n_{M}) d'un paramètre de service du moteur hydraulique.

9. Procédé selon une quelconque des revendications précédentes, le signal de puissance (I) étant mis à disposition d'abord sans dimension, puis limité et/ou réduit en fonction de l'alignement de la valeur de puissance prescrite (P₊ ; P₋) avec la valeur de puissance actuelle respective (P_{Pu} ; P_{M}), et transmis ensuite à partir d'un niveau d'amorçage (11) sur l'actionneur respectif du circuit hydraulique fermé.

10. Procédé selon la revendication précédente, le niveau d'amorçage (11) mettant à disposition un signal de puissance (I_{M}) pour le moteur hydraulique et un signal de puissance (I_{Pu}) pour la pompe hydraulique.

11. Procédé selon la revendication précédente, le régime théorique (n_{Soll}, _{R} ; n_{Soll, L}) de la deuxième unité d'entraînement (17 ; 18) étant déterminé en fonction du régime réel de la première unité d'entraînement (17 ; 18).

12. Dispositif de régulation destiné à la régulation d'un système d'entraînement, notamment d'un système d'entraînement hydraulique d'une grue, d'un train à chenilles, d'un chariot de manutention ou d'une machine de chantier, qui présente au moins deux unités d'entraînement (17 ; 18) pour une roue gauche (13) et une roue droite (14), avec un circuit de commande pour la mise à disposition d'au moins un signal de puissance pour au moins les deux unités d'entraînement (17 ; 18) en fonction d'un régime théorique ainsi que d'une valeur limite de puissance pour au moins les deux unités d'entraînement (17 ; 18), **caractérisé par** un module de commande destiné à la mise à disposition du signal de puissance (I) en fonction d'un signal de commande pilote qui est déterminé en fonction du régime nominal respectif (n_{Soll}, _{R} ; n_{Soll, L}) et d'un régime réel (n_{Pu}) de la pompe hydraulique.

13. Grue, train à chenilles, chariot de manutention ou machine de chantier avec dispositif de régulation selon la revendication 12.
